# EUROPEAN PATENT APPLICATION

(11) **EP 4 407 761 A1**
(43) Date of publication of application: **31.07.2024**
(21) Application number: 22872993.5
(22) Date of filing: 22.09.2022
(51) Int. Cl.: H01M 50/193, H01M 50/184, H01M 50/188, H01M 50/197

(54) **SEALING FILM, ELECTRODE LEAD WIRE MEMBER, AND BATTERY**

(30) Priority: 24.09.2021 JP 2021155742
(71) Applicant: Fujimori Kogyo Co., Ltd., Tokyo 112-0002 (JP)
(72) Inventor: TAKEYAMA Shunsuke, Tokyo 112-0002 (JP); SAKURAGI Takanori, Tokyo 112-0002 (JP); MEGURO Atsufumi, Tokyo 112-0002 (JP); SHIMIZU Takashi, Tokyo 112-0002 (JP)
(74) Representative: Lavoix
(86) International application number: PCT/JP2022/035403
(87) International publication number: WO 2023/048242

(57) **Abstract**

This sealing film (1) seals a gap between an electrode lead wire (11) and a housing vessel (20). The electrode lead wire (11) is electrically connected to a battery body (30). The housing vessel (20) houses the battery body (30). The sealing film (1) includes one or a plurality of thermoplastic resin layers (2, 3, and 4). At least one of the thermoplastic resin layers (2, 3, and 4) includes a hydrogen-bonding resin having a structure allowing hydrogen bonding between molecules thereof.

## Description

### TECHNICAL FIELD

The present invention relates to a sealing film, an electrode lead wire member, and a battery.

Priority is claimed on Japanese Patent Application No. 2021-155742, filed September 24, 2021, the content of which is incorporated herein by reference.

### BACKGROUND ART

In recent years, secondary batteries such as lithium-ion batteries, capacitors, and the like have attracted attention as storage batteries for storing electric energy. For example, the batteries each include a battery body, a housing vessel housing the battery body, and an electrode lead wire connected to the battery body. The housing vessel is produced using a laminate for a battery exterior having excellent waterproofing properties and light blocking properties. For example, the laminate for a battery exterior is a laminate in which a base material layer made of polyamide or the like and an aluminum foil are laminated. The electrode lead wire is sealed in the housing vessel in a state in which a part including one end is drawn out to the outside from the housing vessel.

In the batteries, if water enters the housing vessel, there is a probability that the water will react with components in an electrolyte and hydrogen fluoride will be generated. Hydrogen fluoride may cause deterioration in the electrode lead wire and may affect the battery life. For this reason, it has been proposed to provide a film for sealing interposed between the housing vessel and the electrode lead wire (for example, refer to Patent Document 1).

The film for sealing curbs infiltration of water into the housing vessel from the outside by causing the electrode lead wire and the housing vessel to adhere to each other.

In the film for sealing described in Patent Document 1, degradation in adhesive strength of the film is curbed due to an inorganic filler such as heavy calcium carbonate added thereto.

### CITATION LIST

### [Patent Document]

[Patent Document 1]
Japanese Patent No. 6055300

### SUMMARY OF INVENTION

### Technical Problem

In the film (which will hereinafter be referred to as a sealing film) described in Patent Document 1, there is a probability that hydrogen fluoride generated in the electrolyte will react with calcium carbonate and the like in the film and water will be generated. For this reason, there is concern that generated water may react with components in the electrolyte, hydrogen fluoride may be generated, and therefore the adhesive strength between the sealing film and the electrode lead wire may be degraded due to the hydrogen fluoride.

An object of the present invention is to provide a sealing film, an electrode lead wire member, and a battery, in which degradation in adhesive strength caused by hydrogen fluoride can be curbed.

### Solution to Problem

In order to resolve the foregoing problems, the present invention includes the following aspects.

[1] A sealing film that seals a gap between an electrode lead wire electrically connected to a battery body and a housing vessel housing the battery body, the sealing film including one or a plurality of thermoplastic resin layers, in which at least one of the thermoplastic resin layers includes a hydrogen-bonding resin having a structure allowing hydrogen bonding between molecules thereof.
[2] The sealing film according to [1], in which the plurality of thermoplastic resin layers are provided, the plurality of thermoplastic resin layers include a first thermoplastic resin layer serving as a first adhesive layer which adheres to the electrode lead wire, a second thermoplastic resin layer serving as a second adhesive layer which adheres to the housing vessel, and a third thermoplastic resin layer serving as a base material layer which is provided between the first adhesive layer and the second adhesive layer, and the hydrogen-bonding resin is included in at least one of the first to third thermoplastic resin layers.
[3] The sealing film according to [2], in which the first thermoplastic resin layer includes an acid-modified polyolefin.
[4] The sealing film according to [2] or [3], in which the hydrogen-bonding resin is included in the first thermoplastic resin layer.
[5] The sealing film according to any one of [2] to [4], in which the hydrogen-bonding resin is included in the third thermoplastic resin layer.
[6] The sealing film according to [3], in which the first thermoplastic resin layer includes 50 mass% or more of the acid-modified polyolefin.
[7] The sealing film according to any one of [2] to [6], in which the third thermoplastic resin layer includes 10 mass% or more of acid-modified polyolefin.
[8] The sealing film according to any one of [1] to [7], in which an addition amount of the hydrogen-bonding resin in the entire sealing film is 0.2 mass% or more and 30 mass% or less.
[9] The sealing film according to any one of [1] to [8], in which the hydrogen-bonding resin is a polyamide-based resin.
[10] An electrode lead wire member including the sealing film according to any one of [1] to [9], and the electrode lead wire extending in one direction, in which a part of the sealing film may adhere to the electrode lead wire.
[11] A battery including the electrode lead wire member according to [10], the battery including a battery body, a housing vessel housing the battery body, and the electrode lead wire member, in which a part of the sealing film may adhere to the electrode lead wire, and other parts of the sealing film may adhere to the housing vessel.

### ADVANTAGEOUS EFFECTS OF INVENTION

According to the present invention, it is possible to provide a sealing film, an electrode lead wire member, and a battery, in which degradation in adhesive strength caused by hydrogen fluoride can be curbed.

### BRIEF DESCRIPTION OF DRAWINGS

FIG. 1 is an enlarged cross-sectional view showing a sealing film of an embodiment.
FIG. 2 is a perspective view showing an electrode lead wire member of the embodiment.
FIG. 3 is a perspective view showing a battery of the embodiment.
FIG. 4 is an enlarged arrow cross-sectional view along segment I-I in FIG. 3.
FIG. 5 is an enlarged cross-sectional view showing a sealing film of another embodiment.
FIG. 6 is an enlarged cross-sectional view showing a sealing film of another embodiment.

### DESCRIPTION OF EMBODIMENTS

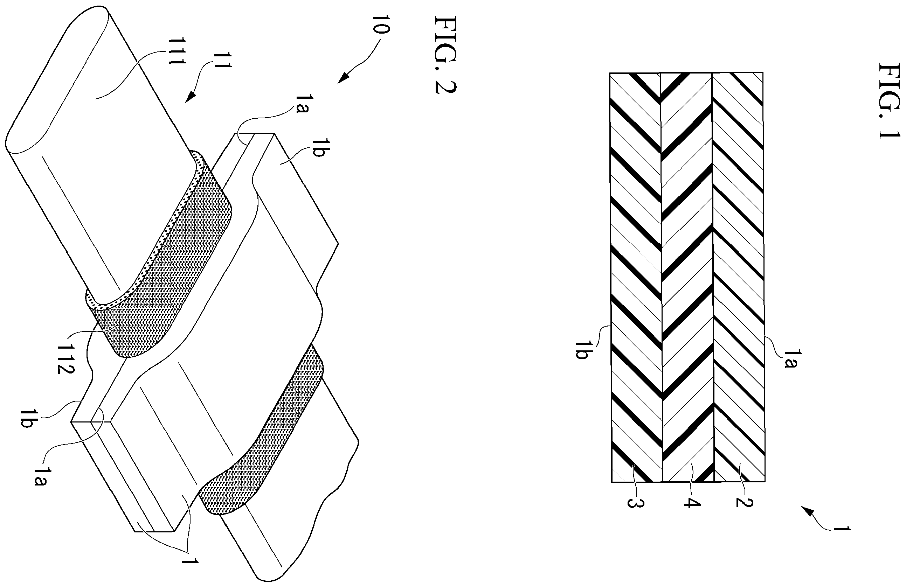

Hereinafter, with reference to FIGS. 1 to 4, a sealing film, an electrode lead wire member, and a battery according to embodiments will be described. In the drawings, dimensions, ratios, and the like of constituent elements may differ from actual values.

### [Sealing film]

FIG. 1 is an enlarged cross-sectional view showing a sealing film 1 of an embodiment. FIG. 2 is a perspective view showing an electrode lead wire member 10 of the embodiment.

As shown in FIG. 2, the electrode lead wire member 10 includes an electrode lead wire 11 made of a conductor such as a metal, and a pair of sealing films 1 of which central portions adhere to the electrode lead wire 11 in an intersecting manner.

As shown in FIG. 1, the sealing films 1 include a first adhesive layer 2, a second adhesive layer 3, and a base material layer 4.

### [First adhesive layer]

The first adhesive layer 2 is a layer fused with (adhered to) the electrode lead wire 11 by heating and pressurizing (refer to FIG. 2). A surface of the first adhesive layer 2 is a surface 1a of the sealing film 1 on one side. The first adhesive layer 2 is a thermoplastic resin layer including a thermoplastic resin. The first adhesive layer 2 is an example of "a first thermoplastic resin layer".

For example, the first adhesive layer 2 mainly includes an acid-modified polyolefin. A state in which the first adhesive layer 2 "mainly includes an acid-modified polyolefin" denotes that the acid-modified polyolefin content is the highest in a resin constituting the first adhesive layer 2. It is preferable that the first adhesive layer 2 include 50 mass% or more of acid-modified polyolefin with respect to the total amount of the first adhesive layer 2. The first adhesive layer 2 preferably includes more than 50 mass% of acid-modified polyolefin with respect to the total amount of the first adhesive layer 2 and more preferably includes 80 mass% or more.

Examples of the polyolefin constituting the first adhesive layer 2 include polypropylene, polyethylene, poly-1-butene, and polyisobutylene. Among these, polypropylene is preferably used as the polyolefin constituting the first adhesive layer 2 due to its excellent flexibility. Hereinafter, polypropylene may be abbreviated as "PP".

The polyolefin may be a copolymer of propylene and ethylene (propylene-ethylene copolymer). A copolymer of propylene and ethylene may be a block copolymer or may be a random copolymer, but it is preferably a random copolymer. The polyolefin may be a copolymer of propylene and an olefin-based monomer. Examples of the olefin-based monomer include 1-butene, isobutylene, and 1-hexene.

The acid-modified polyolefin is a polyolefin-based resin modified with an unsaturated carboxylic acid or a derivative of an unsaturated carboxylic acid. The acid-modified polyolefin has an acid functional group such as a carboxy group or a carboxylic anhydride group in a molecular structure thereof. The acid-modified polyolefin is obtained by graft-polymerizing an unsaturated carboxylic acid or a derivative of an unsaturated carboxylic acid with a polyolefin or copolymerizing an acid functional group-containing monomer and olefins. That is, in the acid-modified polyolefin, repeating units having an acid group may be included in a side chain or may be included in a main chain.

Examples of the unsaturated carboxylic acid include acrylic acid and methacrylic acid.

Examples of the derivative of an unsaturated carboxylic acid include unsaturated carboxylic acid esters such as ethyl acrylate, and acid anhydrides of an unsaturated carboxylic acid such as maleic anhydride.

The adhesiveness of the first adhesive layer 2 with respect to the electrode lead wire 11 (refer to FIG. 2) can be enhanced using the acid-modified polyolefin.

Polyolefins and acid-modified polyolefins are thermoplastic resins.

An acid-modified polypropylene (acid-modified PP) is preferably used as the acid-modified polyolefin due to its excellent heat resistance. For example, the acid-modified PP is a polymer obtained by graft-copolymerizing an unsaturated carboxylic acid or a derivative of an unsaturated carboxylic acid with polypropylene or a propylene-ethylene copolymer.

The acid-modified PP includes an ionomer obtained by neutralizing a carboxylic acid group contained in an acid-modified polymer of polypropylene or an acid-modified polymer of a propylene-ethylene copolymer with a metal hydroxide, alkoxide, lower fatty acid salt, or the like. The acid group of the acid-modified PP is preferably a maleic anhydride group. That is, maleic anhydride-modified PP is preferably an acid-modified PP.

The first adhesive layer 2 may not include a hydrogen-bonding resin (which will be described below). In this case, the proportion of a material excellent in adhesive strength can be increased in the first adhesive layer 2. Accordingly, the adhesive strength between the first adhesive layer 2 and the electrode lead wire 11 becomes favorable.

The melting point of the resin (or the resin composition) constituting the first adhesive layer 2 is preferably 110°C or more and 150°C or less.

If the melting point of the resin constituting the first adhesive layer 2 is 110°C or higher, the first adhesive layer 2 is less likely to become excessively thin at the time of thermocompression bonding so that it is easy to secure the adhesive strength. If the melting point of the resin constituting the first adhesive layer 2 is 150°C or lower, the resin is likely to flow at the time of thermocompression bonding so that the resin sufficiently permeates around the electrode lead wire 11 and it is easy to seal the perimeter of the electrode lead wire 11.

When "the resin constituting the first adhesive layer 2" is a polymer alloy of two or more kinds of resins, "the melting point of the resin constituting the first adhesive layer 2" denotes the melting point of the polymer alloy constituting the first adhesive layer 2.

In the first adhesive layer 2, examples of the arbitrary component other than polyolefins can include known additives such as a stabilizer, an antistatic agent, and a coloring agent.

For example, when the thickness of the entire sealing film 1 is 100, the thickness of the first adhesive layer 2 can be 5 or more and 90 or less. That is, the thickness of the first adhesive layer 2 can be 5% to 90% of the thickness of the entire sealing film 1. When the thickness of the entire sealing film 1 is 100, the thickness of the first adhesive layer 2 is preferably 25 or more and 70 or less. The proportion of the thickness of a layer when the thickness of the entire sealing film 1 is 100 will be referred to as "a thickness proportion".

If the thickness proportion of the first adhesive layer 2 is 5 or higher (preferably 25 or higher), the adhesive strength between the first adhesive layer 2 and the electrode lead wire 11 can be sufficiently secured. If the thickness proportion of the first adhesive layer 2 is 90 or lower (preferably 70 or lower), a sufficient thickness can be imparted to the second adhesive layer 3 and the base material layer 4. For this reason, the electrolyte resistance of the sealing film 1 is not degraded, and the adhesive strength between the second adhesive layer 3 and a housing vessel can be enhanced. The "electrolyte resistance" is a resistance with respect to an electrolyte.

### [Second adhesive layer]

For example, the second adhesive layer 3 is a layer fused with (adhered to) the housing vessel by heating and pressurizing. The housing vessel will be described below. A surface of the second adhesive layer 3 is a surface 1b of the sealing film 1 on the other side. The second adhesive layer 3 is a thermoplastic resin layer including a thermoplastic resin. The second adhesive layer 3 is an example of "a second thermoplastic resin layer".

For example, the second adhesive layer 3 mainly includes a polyolefin. A state in which the second adhesive layer 3 "mainly includes a polyolefin" denotes that the polyolefin content is the highest in a resin constituting the second adhesive layer 3. The second adhesive layer 3 includes 50 mass% or more of polyolefin with respect to the total amount of the second adhesive layer 3, preferably includes more than 50 mass%, and more preferably includes 80 mass% or more.

Examples of the polyolefin constituting the second adhesive layer 3 include polypropylene (PP), polyethylene, poly-1-butene, and polyisobutylene. Among these, PP is preferably used as the polyolefin constituting the second adhesive layer 3 due to its excellent flexibility.

The polyolefin may be a copolymer of propylene and ethylene (propylene-ethylene copolymer). A copolymer of propylene and ethylene may be a block copolymer or may be a random copolymer, but it is preferably a random copolymer. The polyolefin may be a copolymer of propylene and an olefin-based monomer (for example, a random copolymer). Examples of the olefin-based monomer include 1-butene, isobutylene, and 1-hexene.

The polyolefin constituting the second adhesive layer 3 may be an acid-modified polyolefin. The acid-modified polyolefin is preferably an acid-modified PP due to its excellent heat resistance. Regarding the acid-modified PP, the acid-modified PP presented as an example of the material of the first adhesive layer 2 described above is favorably used. The acid-modified PP is preferably a polymer obtained by acid-modifying a random copolymer of propylene and ethylene due to its excellent flexibility. The adhesiveness of the second adhesive layer 3 with respect to the housing vessel can be enhanced using the acid-modified polyolefin.

The second adhesive layer 3 may include both an acid-modified PP and an acid-modified polyethylene. When the second adhesive layer 3 includes both an acid-modified PP and an acid-modified polyethylene, since the melting point of the second adhesive layer 3 can be lowered and the heating temperature during fusion of the second adhesive layer 3 can be lowered, deterioration in the first adhesive layer 2 can be curbed.

The second adhesive layer 3 may not include a hydrogen-bonding resin (which will be described below). In this case, the proportion of a material excellent in adhesive strength can be increased in the second adhesive layer 3. Accordingly, the adhesive strength between the second adhesive layer 3 and the housing vessel becomes favorable.

The melting point of the resin (or the resin composition) constituting the second adhesive layer 3 is preferably 110°C or higher and 150°C or lower. If the melting point of the resin constituting the second adhesive layer 3 is 110°C or higher, the second adhesive layer 3 is less likely to become excessively thin at the time of thermocompression bonding so that it is easy to secure the adhesive strength. If the melting point of the resin constituting the second adhesive layer 3 is 150°C or lower, the resin is likely to flow at the time of thermocompression bonding so that it is easy to seal a gap between the housing vessel and the electrode lead wire 11.

When "the resin constituting the second adhesive layer 3" is a polymer alloy of two or more kinds of resins, "the melting point of the resin constituting the second adhesive layer 3" denotes the melting point of the polymer alloy constituting the second adhesive layer 3.

In the second adhesive layer 3, examples of the arbitrary component other than acid-modified polyolefins can include known additives such as a stabilizer, an antistatic agent, and a coloring agent.

For example, when the thickness of the entire sealing film 1 is 100, the thickness (thickness proportion) of the second adhesive layer 3 can be 5 or higher and 90 or lower. That is, the thickness of the second adhesive layer 3 can be 5% or higher and 90% or lower of the thickness of the entire sealing film 1. The thickness proportion of the second adhesive layer 3 is preferably 5 or higher and 50 or lower.

If the thickness proportion of the second adhesive layer 3 is 5 or higher, the adhesive strength between the second adhesive layer 3 and the housing vessel can be sufficiently secured. If the thickness proportion of the second adhesive layer 3 is 90 or lower (preferably 50 or lower), a sufficient thickness can be imparted to the first adhesive layer 2 and the base material layer 4. For this reason, the electrolyte resistance of the sealing film 1 is not degraded, and the adhesive strength between the first adhesive layer 2 and the electrode lead wire 11 can be enhanced.

### [Base material layer]

The base material layer 4 is provided in a manner of being interposed between the first adhesive layer 2 and the second adhesive layer 3. The base material layer 4 is a thermoplastic resin layer including a thermoplastic resin. The base material layer 4 is an example of "a third thermoplastic resin layer".

For example, the base material layer 4 mainly includes a polyolefin. A state in which the base material layer 4 "mainly includes a polyolefin" denotes that the polyolefin content is the highest in a resin constituting the base material layer 4. The base material layer 4 includes 50 mass% or more of polyolefin with respect to the total amount of the base material layer 4, preferably includes more than 50 mass%, and more preferably includes 80 mass% or more.

Examples of the polyolefin constituting the base material layer 4 include polypropylene (PP), polyethylene, poly-1-butene, and polyisobutylene. Among these, PP is preferably used due to its excellent flexibility.

The polyolefin constituting the base material layer 4 may be a homopolymer of one kind of olefin or may be a copolymer of two or more kinds of olefin. Examples of the homopolymer include a homopolymer (homo-PP) having only propylene. Examples of the copolymer include a copolymer of propylene and an olefin-based monomer (ethylene, 1-butene, isobutylene, 1-hexene, or the like), for example, a propylene-ethylene copolymer.

Regarding the polyolefin constituting the base material layer 4, polymers presented as examples of the polyolefin constituting the first adhesive layer 2 can be presented as examples.

The polyolefin constituting the base material layer 4 is preferably an impact copolymer (ICP). An ICP has a phase separation structure, for example, a sea-island structure having a first phase and second phases. A sea-island structure is a structure in which a plurality of second phases corresponding to "islands" are dispersed in a first phase corresponding to "sea".

For example, the first phase is constituted of a homopolymer of an olefin-based monomer such as propylene or ethylene. The second phases are constituted of polymers different from the homopolymer constituting the first phase. For example, the second phases each include a polymer of an olefin-based monomer such as propylene or ethylene, for example, ethylene propylene rubber (EPR). For example, the second phases are each constituted of a main phase and a surface layer covering a surface of the main phase. For example, the main phase is constituted of polyethylene. For example, the surface layer is constituted of EPR.

An ICP in which the homopolymer constituting the first phase is homo-PP will be referred to as a polypropylene ICP or a polypropylene dispersion. An ICP in which the homopolymer constituting the first phase is homo-PP is so-called block PP. An ICP is also referred to as a heterophasic copolymer or a block copolymer.

The base material layer 4 includes a hydrogen-bonding resin. For example, the base material layer 4 may be constituted to include a mixture of a hydrogen-bonding resin and a polyolefin. It is preferable that the hydrogen-bonding resin be a thermoplastic resin.

A hydrogen-bonding resin is a resin including a structure allowing hydrogen bonding between molecules thereof. For example, hydrogen bonding is a non-covalent bonding attractive interaction made by hydrogen atoms bonded to atoms having a significant electronegativity (negative atoms) by covalent bonding and lone pairs of electrons in nearby nitrogen, oxygen, sulfur, fluorine, and the like. Since the electronegativity of negative atoms is greater than the electronegativity of hydrogen atoms, positive charges are partially generated in hydrogen atoms, and negative charges are partially generated in negative atoms. The electronegativity of negative atoms (Pauling's electronegativity) is preferably 3.0 or greater. The electronegativity (Pauling's electronegativity) of atoms of a bonding counterpart to which hydrogen atoms bonded to negative atoms are hydrogen-bonded is preferably 3.0 or greater.

A structure allowing hydrogen bonding may be an atomic group such as amide bonding, urethane bonding, or diketone or may be a functional group such as an amino group, a carbonyl group, a hydroxyl group, a thiol group, a carboxy group, a sulfonic acid group, or a phosphate group. Among these, an amide-bonding atomic group and a urethane-bonding atomic group are preferably used.

An amide-bonding atomic group (CO-NH) includes carbon and oxygen constituting "CO" and nitrogen and hydrogen constituting "NH" as constituent elements.

Hydrogen fluoride is formed by covalent bonding of fluorine (negative atoms) and hydrogen. The electronegativity (Pauling's electronegativity) of fluorine is 4.0, and the electronegativity (Pauling's electronegativity) of hydrogen is 2.1. For this reason, there is a probability that hydrogen bonding will be formed between the lone pairs of electrons in oxygen (Pauling's electronegativity: 3.5) of the amide-bonding atomic group and hydrogen atoms in hydrogen fluoride. That is, as shown in Expression (1), there is a probability that hydrogen bonding indicated by "..." will be formed between O and H shown in "C=O ... H-F".

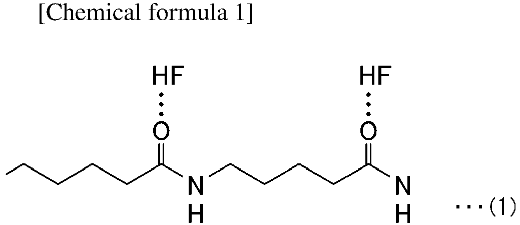

In the amide-bonding atomic group (CO-NH), hydrogen (Pauling's electronegativity: 2.1) is bonded to nitrogen (Pauling's electronegativity: 3.0) by covalent bonding. For this reason, there is a probability that hydrogen bonding will be formed between hydrogen atoms of the amide-bonding atomic group (CO-NH) and the lone pairs of electrons of fluorine of hydrogen fluoride. That is, as shown in Expression (2), there is a probability that hydrogen bonding indicated by "..." will be formed between H and F shown in "N-H ... F-H".

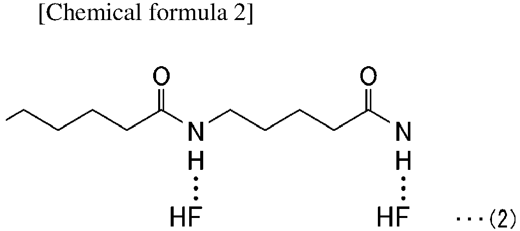

In this manner, hydrogen atoms included in a structure allowing hydrogen bonding may be covalently bonded to atoms having a high electronegativity (for example, atoms having a Pauling's electronegativity of 3.0 or greater).

Examples of the hydrogen-bonding resin having an amide-bonding atomic group include a polyamide-based resin. A polyamide-based resin has an amide-bonding atomic group (CO-NH) inside the molecules as repeating units. Examples of the polyamide-based resin include an aliphatic polyamide resin, for example, a nylon resin. Examples of the nylon resin include nylon 6, nylon 11, nylon 12, nylon 610, and nylon 612 shown in the following Expression (3); nylon 66, nylon 6/66, and nylon 66/12 shown in the following Expression (4); at least two blends of these; and the like.

An aromatic polyamide resin can also be used as a polyamide-based resin. Examples of the aromatic polyamide resin include poly-p-phenylene terephthalamide, poly-p-phenylene isophthalamide, poly-m-phenylene isophthalamide, and nylon MXD6 shown in the following Expression (5). At least two blends of these may be used.

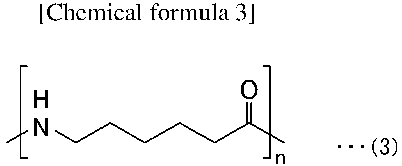

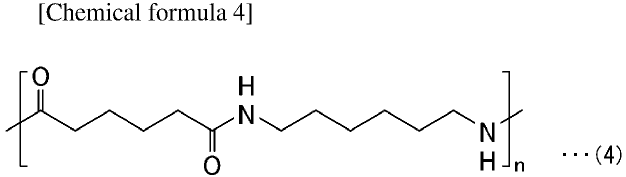

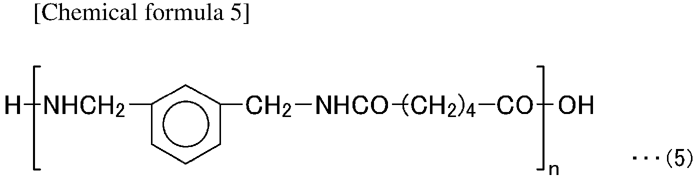

A urethane-bonding atomic group (NH-COO) includes nitrogen and hydrogen constituting "NH" and carbon and oxygen constituting "COO" as constituent elements. There is a probability that hydrogen bonding will be formed between the lone pairs of electrons of oxygen (Pauling's electronegativity: 3.5) of the urethane-bonding atomic group and hydrogen atoms of hydrogen fluoride. That is, there is a probability that hydrogen bonding indicated by "..." will be formed between O and H shown in "C=O ... H-F".

In the urethane-bonding atomic group (NH-COO), hydrogen (Pauling's electronegativity: 2.1) is bonded to nitrogen (Pauling's electronegativity: 3.0) by covalent bonding. For this reason, there is a probability that hydrogen bonding will be formed between hydrogen atoms of the urethane-bonding atomic group (NH-COO) and the lone pairs of electrons of fluorine of hydrogen fluoride. That is, there is a probability that hydrogen bonding indicated by "..." will be formed between H and F shown in "N-H ... F-H".

Examples of the hydrogen-bonding resin having a urethane-bonding atomic group include a polyurethane-based resin. A polyurethane-based resin has a urethane-bonding atomic group (NH-COO) inside the molecules as repeating units. Examples of the polyurethane-based resin include a polyether-based polyurethane resin, a polyester-based polyurethane resin, and a polycarbonate-based polyurethane resin.

The polyurethane-based resin may be a urethane-based elastomer. For example, a urethane-based elastomer has a hard segment and a soft segment. The hard segment is constituted of polyurethane. The soft segment is constituted of polycarbonate-based polyol, ether-based polyol, caprolactone-based polyester, adipate-based polyester, or the like.

The addition amount (content) of a hydrogen-bonding resin in the entire sealing film 1 is preferably 0.2 mass% to 30 mass%, is more preferably 0.5 mass% to 20 mass%, and is even more preferably 1.0 mass% to 10 mass%.

If the addition amount of a hydrogen-bonding resin in the entire sealing film 1 is 0.2 mass% or more, an effect of reducing an influence of hydrogen fluoride on the electrode lead wire 11 can be enhanced. If the addition amount of a hydrogen-bonding resin in the entire sealing film 1 is 30 mass% or smaller, functional degradation in a layer including a hydrogen-bonding resin (in the present embodiment, the base material layer 4) can be curbed. For example, degradation in heat resistance, mechanical strength, and the like of the base material layer 4 can be curbed.

When the layer including a hydrogen-bonding resin is at least one of the first adhesive layer 2 and the second adhesive layer 3, if the addition amount of a hydrogen-bonding resin in the entire sealing film 1 is 30 mass% or smaller, degradation in adhesiveness, mechanical strength, and the like of the adhesive layer can be curbed.

The addition amount of a hydrogen-bonding resin in the base material layer 4 may be, for example, 0.5 mass% to 60 mass% (preferably 1.0 mass% to 40 mass%, and more preferably 2.0 mass% to 20 mass%).

The layer including a hydrogen-bonding resin (in the present embodiment, the base material layer 4) may include not only a hydrogen-bonding resin and a polyolefin but also a resin material other than those. The layer including a hydrogen-bonding resin (in the present embodiment, the base material layer 4) may be constituted of only a hydrogen-bonding resin.

When the thickness of the entire sealing film 1 is 100, the thickness (thickness proportion) of the base material layer 4, 5 to 70 is preferably. That is, it is preferable that the thickness of the base material layer 4 be 5% to 70% of the thickness of the entire sealing film 1.

If the thickness proportion of the base material layer 4 is 5 or higher, the resin is not likely to flow excessively, and it is easy to exhibit the fluidity required at the time of compression bonding. If the thickness proportion of the base material layer 4 is 5 or higher (preferably 25 or higher), there is also an advantage that the electrolyte resistance and the heat resistance of the sealing film 1 can be enhanced.

If the thickness proportion of the base material layer 4 is 70 or lower, the fluidity of the resin at the time of thermocompression bonding can be curbed within an appropriate range. If the thickness proportion of the base material layer 4 is 70 or lower, a sufficient thickness can be imparted to the first adhesive layer 2 and the second adhesive layer 3, and therefore both the adhesive strength between the first adhesive layer 2 and the electrode lead wire 11 and the adhesive strength between the second adhesive layer 3 and the housing vessel can be enhanced.

The melting point of the resin (or the resin composition) constituting the base material layer 4 is preferably 150°C to 170°C. If the melting point of the resin constituting the base material layer 4 is 150°C or higher, it is easy to secure the electrolyte resistance of the sealing film 1. In addition, a heat resistance can be imparted to the sealing film 1. If the melting point of the resin constituting the base material layer 4 is 170°C or lower, flexibility can be imparted to the sealing film 1. For this reason, a gap is less likely to be generated between the electrode lead wire 11 and the housing vessel, and the sealing film 1.

A melting point M4 of the resin constituting the base material layer 4 is higher than a melting point M2 of the resin constituting the first adhesive layer 2 or a melting point M3 of the resin constituting the second adhesive layer 3. That is, the melting point M4 is higher than the melting point M2 or the melting point M3. It is desirable that the melting point M4 be higher than both the melting point M2 and the melting point M3. In other words, it is desirable that the melting point M4 be higher than at least one of the melting point M2 and the melting point M3.

If the melting point M4 is higher than the melting point M2, the fluidity of the resin does not become excessively low so that it is possible to have the fluidity of the resin at the time of thermocompression bonding within an appropriate range. In addition, it is easy to secure the electrolyte resistance of the sealing film 1 without having degradation in adhesive strength between the first adhesive layer 2 and the electrode lead wire 11. If the melting point M4 is higher than the melting point M3, the fluidity of the resin does not become excessively low so that it is possible to have the fluidity of the resin at the time of thermocompression bonding within an appropriate range. In addition, it is easy to secure the electrolyte resistance of the sealing film 1 without having degradation in adhesive strength between the second adhesive layer 3 and the housing vessel. If the melting point M4 is higher than the melting point M2 or the melting point M3, there is also an advantage that it is easy to impart a heat resistance to the sealing film 1.

When the hydrogen-bonding resin of the base material layer 4 has low compatibility with other resins constituting the base material layer 4, poor exterior appearance may occur due to mixing unevenness (uneven mixing) and unmelted residue. In order to prevent this poor exterior appearance, it is desirable that an acid-modified polyolefin be added to the base material layer 4. All of the materials constituting the base material layer 4 other than hydrogen-bonding resins may be an acid-modified polyolefin. However, in consideration of effects of economic efficiency and the compatibility, the acid-modified polyolefin content in the base material layer 4 is preferably 10 mass% or more. In addition, even when a hydrogen-bonding resin is added to the first adhesive layer 2, it is desirable that an acid-modified polyolefin be added to the first adhesive layer 2. Even when a hydrogen-bonding resin is added to the second adhesive layer 3, it is desirable that an acid-modified polyolefin be added to the second adhesive layer 3.

### [Electrode lead wire member]

As shown in FIG. 2, the electrode lead wire member 10 has the electrode lead wire 11 and the pair of sealing films 1. In this example, the electrode lead wire 11 extends linearly in a strip shape with a uniform thickness in which both surfaces are flat. In this example, the sealing films 1 have rectangular shapes of which the dimensions are the same as each other and are disposed with central portions thereof orthogonal to the electrode lead wire 11. However, the electrode lead wire member of the present invention is not limited to this shape and can be suitably deformed as necessary.

The pair of sealing films 1 are disposed with the first adhesive layers 2 facing each other. The pair of sealing films 1 sandwich the electrode lead wire 11 therebetween. The pair of sealing films 1 respectively come into contact with regions corresponding to one surface and the other surface of the electrode lead wire 11. For this reason, the pair of sealing films 1 in their entirety come into contact with the perimeter of the electrode lead wire 11.

The electrode lead wire 11 has a lead wire body 111 and a surface-treated layer 112. The electrode lead wire 11 extends linearly in one direction. The electrode lead wire 11 is made of a metal.

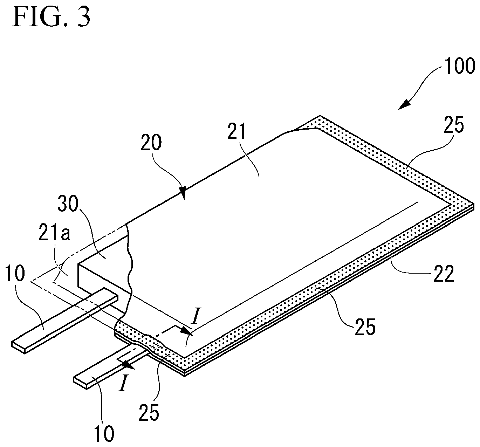

The electrode lead wire 11 has conductivity. The electrode lead wire 11 is electrically connected to a lithium-ion battery 30 (refer to FIG. 3). The electrode lead wire 11 conducts electricity between the lithium-ion battery 30 and external instruments. For example, a known metal such as aluminum, copper, nickel, iron, gold, platinum, or various kinds of alloys can be used as a material of the lead wire body 111. Among these, aluminum and copper are preferably used due to its excellent conductivity and advantage in terms of cost.

The surfaces of the lead wire body 111 may be subjected to nickel plating. Nickel plating on the lead wire body 111 may be formed by electroplating using a Watts bath having nickel sulfate, nickel chloride, boric acid, and the like as main components. It is preferable to perform nickel plating on the lead wire body 111 using a nickel sulfamate plating bath having nickel sulfamate and boric acid as main components. A plating film formed by this method has excellent flexibility and cracking is less likely to occur in the plating film. An aluminum plate or a nickel-plated copper plate is preferably used as the lead wire body 111.

The surface-treated layer 112 is formed on a surface of the lead wire body 111. The surface-treated layer 112 has a corrosion resistance. A "corrosion resistance" indicates properties of being resistant to corrosion due to the electrolyte inside the battery. Examples of the surface-treated layer 112 can include an acid resistant film formed of a material such as phosphate, chromate, fluorides, or a triazine thiol compound. An acid resistant film can be formed by having the lead wire body 111 subjected to chemical conversion treatment.

In FIG. 2, the surface-treated layer 112 is formed in a part on the surface of the lead wire body 111, but the surface-treated layer 112 may be formed in the entire region on the surface of the lead wire body 111. In the electrode lead wire, a surface-treated layer may not be formed.

The sealing film 1 includes a hydrogen-bonding resin. For this reason, when hydrogen fluoride is included in the electrolyte, at least a part of this hydrogen fluoride is captured by the sealing film 1 due to hydrogen bonding with the hydrogen-bonding resin. Therefore, an influence of hydrogen fluoride on the electrode lead wire 11 can be reduced, and deterioration in the electrode lead wire 11 can be curbed. Thus, degradation in adhesive strength of the sealing film 1 with respect to the electrode lead wire 11 can be curbed.

The sealing film 1 includes the first adhesive layer 2, the base material layer 4, and the second adhesive layer 3, and these are laminated in this order. For this reason, different characteristics can be imparted to each layer depending on selection of a constituent material. Thus, the electrolyte resistance and heat resistance can be enhanced by the base material layer 4, and the adhesiveness with respect to the electrode lead wire 11 and the housing vessel can be enhanced by the adhesive layers 2 and 3.

When a hydrogen-bonding resin is included in only the base material layer 4, the proportion of a material excellent in adhesive strength can be increased in the adhesive layers 2 and 3, and therefore the adhesiveness with respect to the electrode lead wire 11 and the housing vessel can be enhanced.

Since the electrode lead wire member 10 includes the sealing films 1, degradation in adhesive strength between the sealing films 1 and the electrode lead wire 11 can be curbed.

### [B attery]

FIG. 3 is a schematic perspective view showing a battery 100 of the embodiment. As shown in FIG. 3, the battery 100 has the electrode lead wire members 10 described above, a housing vessel 20, and the lithium-ion battery 30 (battery body). In this example, the battery body 30 has a flat rectangular parallelepiped shape, and a pair of electrode lead wire members 10 are connected to one end thereof in the longitudinal direction such that they become parallel to each other. In this example, the housing vessel 20 has a flat rectangular parallelepiped shape corresponding to that of the battery body 30. However, the battery of the present invention is not limited to this shape and can be suitably deformed as necessary.

The housing vessel 20 has a vessel body 21 and a lid 22. The vessel body 21 is obtained by performing drawing molding of a laminate for a battery exterior. The vessel body 21 has a molded portion 21a which forms a recessed portion for housing the lithium-ion battery 30. The laminate for a battery exterior will be described below. The lid 22 is constituted of the laminate for a battery exterior and has an area equivalent to that of the vessel body 21 in a plan view. The housing vessel 20 is formed by causing the vessel body 21 and the lid 22 to overlap each other and performing heat-sealing of a circumferential edge portion 25.

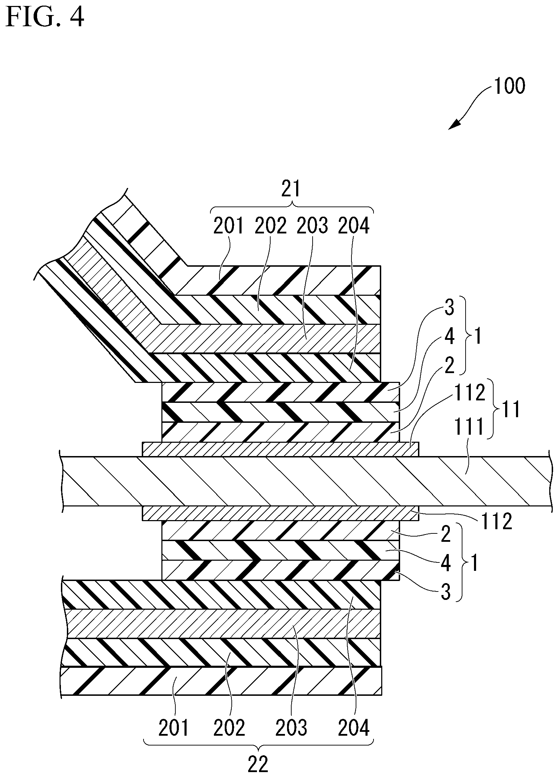

FIG. 4 is an arrow cross-sectional view along segment I-I in FIG. 3. As shown in FIG. 4, the laminate for a battery exterior, which is the constituent material of the vessel body 21 and the lid 22, is a laminate in which a first film base material 201, a second film base material 202, a metal foil 203, and a sealant layer 204 are laminated in this order.

The resin constituting the first film base material 201 and the second film base material 202 is not particularly limited. However, polyamide, polyethylene terephthalate (PET), a phenol resin, polypropylene, or the like is favorably used. An aluminum foil, a stainless steel foil, a copper foil, an iron foil, or the like can be used as the metal foil 203.

The sealant layer 204 comes into contact with the second adhesive layer 3 of the sealing film 1 and is thermally fused. Regarding the resin forming the sealant layer 204, a resin which can be fused with the sealing film 1 is selected. Examples of the resin forming the sealant layer 204 include a polypropylene-based resin and a polyethylene-based resin. A homopolymer of polypropylene, a copolymer of propylene and ethylene, or the like can be used as the polypropylene-based resin. Low-density polyethylene, linear low-density polyethylene, or the like can be used as the polyethylene-based resin.

As shown in FIGS. 3 and 4, in the battery 100, the electrode lead wire member 10 is drawn out to the outside of the housing vessel 20 from the lithium-ion battery 30 inside the housing vessel 20 (inside the molded portion 21a). The electrode lead wire 11 is fused with the sealant layer 204 of the housing vessel 20 with the sealing film 1 therebetween.

According to the battery 100, since the electrode lead wire member 10 has the sealing films 1 described above, deterioration in the electrode lead wire 11 due to hydrogen fluoride can be curbed, and degradation in adhesive strength between the sealing films 1 and the electrode lead wire 11 can be curbed. Thus, a highly reliable battery 100 can be realized.

Hereinabove, preferred examples of the embodiment according to the present invention have been described with reference to the accompanying drawings, but the present invention is not limited to the examples. Various shapes, combinations, and the like of constituent members shown in the examples described above are merely examples and can be variously changed based on design requirements or the like within a range not departing from the gist of the present invention.

In the sealing film 1 shown in FIG. 1, only the base material layer 4, of the first adhesive layer 2 (first thermoplastic resin layer), the second adhesive layer 3 (second thermoplastic resin layer), and the base material layer 4 (third thermoplastic resin layer), includes a hydrogen-bonding resin, but the sealing film is not limited to the constitution in FIG. 1.

A hydrogen-bonding resin need only be included in at least one of the first to third thermoplastic resin layers. A hydrogen-bonding resin may be included in any of the thermoplastic resin layers. For example, a hydrogen-bonding resin may be included in only the first adhesive layer 2 or a hydrogen-bonding resin may be included in only the second adhesive layer 3, of the first adhesive layer 2, the second adhesive layer 3, and the base material layer 4.

A hydrogen-bonding resin may be included in only two of the first adhesive layer 2, the second adhesive layer 3, and the base material layer 4. For example, a hydrogen-bonding resin may be included in the first adhesive layer 2 and the second adhesive layer 3, a hydrogen-bonding resin may be included in the first adhesive layer 2 and the base material layer 4, or a hydrogen-bonding resin may be included in the second adhesive layer 3 and the base material layer 4. A hydrogen-bonding resin may be included in all of the first adhesive layer 2, the second adhesive layer 3, and the base material layer 4. Regarding the addition amount of a hydrogen-bonding resin, the addition amount presented as an example in the sealing film 1 shown in FIG. 1 can be employed.

In the sealing film, since a hydrogen-bonding resin is included in at least one of the first to third thermoplastic resin layers, when hydrogen fluoride is included in the electrolyte, at least a part of the hydrogen fluoride in the electrolyte is captured by the sealing film due to hydrogen bonding with the hydrogen-bonding resin. Thus, degradation in adhesive strength of the sealing film with respect to the electrode lead wire can be curbed.

The expression "a thermoplastic resin layer includes a hydrogen-bonding resin" includes a case in which a thermoplastic resin layer is constituted of only a hydrogen-bonding resin. A hydrogen-bonding resin is not limited to a homopolymer of a monomer including a structure allowing hydrogen bonding and may be a copolymer of a monomer including a structure allowing hydrogen bonding and a monomer including no structure allowing hydrogen bonding.

The sealing film 1 shown in FIG. 1 includes the first adhesive layer 2, the second adhesive layer 3, and the base material layer 4, but the sealing film of the embodiment is not limited to this structure.

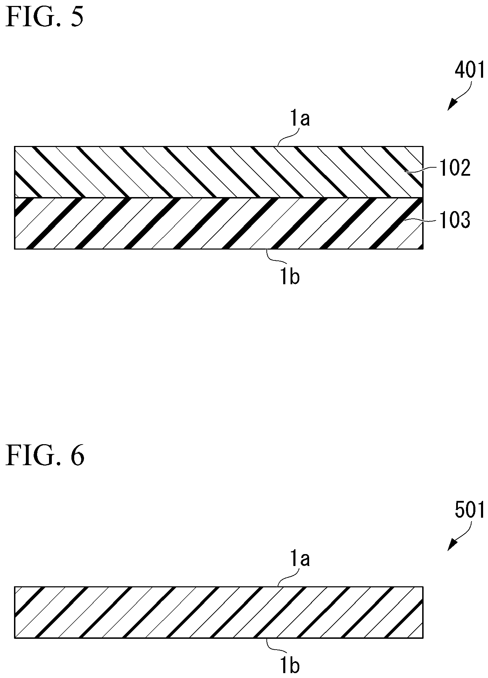

FIG. 5 is a schematic cross-sectional view showing a sealing film of another embodiment. A sealing film 401 shown in FIG. 5 has a two-layer structure including a first adhesive layer 102 (first thermoplastic resin layer) and a second adhesive layer 103 (second thermoplastic resin layer). The same reference signs are applied to constitutions common to the sealing film 1 shown in FIG. 1, and description thereof will be omitted.

The constituent material of the first adhesive layer 102 may be a material presented as an example of the constituent material of the first adhesive layer 2 in the sealing film 1 shown in FIG. 1. The constituent material of the second adhesive layer 103 may be a material presented as an example of the constituent material of the second adhesive layer 3 in the sealing film 1 shown in FIG. 1.

A hydrogen-bonding resin is added to any one of or both the first adhesive layer 102 and the second adhesive layer 103. Regarding the addition amount of a hydrogen-bonding resin, the addition amount presented as an example in the sealing film 1 shown in FIG. 1 can be employed.

Since the sealing film 401 includes a hydrogen-bonding resin, degradation in adhesive strength with respect to the electrode lead wire 11 can be curbed.

FIG. 6 is a schematic cross-sectional view showing a sealing film of further another embodiment. A sealing film 501 shown in FIG. 6 has a single-layer structure. The same reference signs are applied to constitutions common to the sealing film 1 shown in FIG. 1, and description thereof will be omitted. The sealing film 501 is constituted of one thermoplastic resin layer. The constituent material of the sealing film 501 may be a material presented as an example of the constituent material of the first adhesive layer 2 or the second adhesive layer 3 in the sealing film 1 shown in FIG. 1.

A hydrogen-bonding resin is added to the sealing film 501. Regarding the addition amount of a hydrogen-bonding resin, the addition amount presented as an example in the sealing film 1 shown in FIG. 1 can be employed.

Since the sealing film 501 includes a hydrogen-bonding resin, degradation in adhesive strength with respect to the electrode lead wire 11 can be curbed.

When the sealing film is constituted of two layers or three layers, the first adhesive layer and the second adhesive layer may include a resin other than polyolefins. In addition, the sealing film may include a layer other than the first adhesive layer, the base material layer, and the second adhesive layer.

### EXAMPLES

Examples of the present invention will be described below, but the present invention is not limited to these Examples.

### [Production of sealing film]

### EXAMPLE 1

A sealing film formed with only a base material layer was produced as follows. The sealing film was obtained by heating and melting a resin serving as a raw material of the base material layer and performing film formation. This sealing film was formed to have a strip shape (width: 15 mm, thickness: 100 µm).

The sealing film (base material layer) was constituted of a mixture of maleic anhydride modified polypropylene (melting point: 140°C) and nylon 6 (melting point: 225°C). Maleic anhydride modified polypropylene was a polymer obtained by graft-polymerizing maleic anhydride with a random copolymer of propylene and ethylene. Since nylon 6 included an amide-bonding atomic group, it was a hydrogen-bonding resin. The addition amount of nylon 6 in the entire sealing film was 0.2 mass%.

### EXAMPLES 2 AND 4 TO 8

Sealing films in which the first adhesive layer, the base material layer, and the second adhesive layer were laminated in this order were produced as follows. The laminates (sealing films) were obtained by separately heating and melting each of resins which became raw materials of respective layers and performing simultaneous multilayer film formation using an extruder capable of performing simultaneous multilayer extrusion molding. The laminates were formed to have a strip shape (width: 15 mm, thickness: 100 µm).

The constituent materials of the first adhesive layer, the base material layer, and the second adhesive layer were as follows.
First adhesive layer: maleic anhydride modified polypropylene (melting point: 140°C)
Base material layer: a mixture of a polypropylene ICP (melting point: 161°C) and nylon 6 (melting point: 225°C)
Second adhesive layer: a random copolymer of propylene and ethylene (melting point: 140°C)

Maleic anhydride modified polypropylene was similar to the maleic anhydride modified polypropylene used in Example 1.

The polypropylene ICP had a structure in which the second phases were dispersed in the first phase (sea-island structure). The first phase was constituted of homo-PP. The second phases each include ethylene propylene rubber and polyethylene.

The thickness of the first adhesive layer was 10 µm. The thickness of the base material layer was 50 µm. The thickness of the second adhesive layer was 40 µm.

In Example 2, the addition amount of nylon 6 in the entire sealing film was 0.2 mass%. The addition amount of nylon 6 in the base material layer was 0.4 mass%.

In Example 4, the addition amount of nylon 6 in the entire sealing film was 1 mass%. The addition amount of nylon 6 in the base material layer was 2 mass%.

In Example 5, the addition amount of nylon 6 in the entire sealing film was 5 mass%. The addition amount of nylon 6 in the base material layer was 10 mass%.

In Example 6, the addition amount of nylon 6 in the entire sealing film was 10 mass%. The addition amount of nylon 6 in the base material layer was 20 mass%.

In Example 7, the addition amount of nylon 6 in the entire sealing film was 20 mass%. The addition amount of nylon 6 in the base material layer was 40 mass%.

In Example 8, the addition amount of nylon 6 in the entire sealing film was 30 mass%. The addition amount of nylon 6 in the base material layer was 60 mass%.

### EXAMPLES 3 AND 9

Sealing films in which the first adhesive layer, the base material layer, and the second adhesive layer were laminated in this order were produced as follows. The constituent materials of the first adhesive layer, the base material layer, and the second adhesive layer were as follows.
First adhesive layer: a mixture of maleic anhydride modified polypropylene (melting point: 140°C) and nylon 6
Base material layer: a mixture of a polypropylene ICP (melting point: 161°C) and nylon 6
Second adhesive layer: a mixture of a random copolymer of propylene and ethylene (melting point: 140°C) and nylon 6

In Example 3, the addition amount of nylon 6 in the entire sealing film was 1 mass%. The addition amount of nylon 6 in each of the first adhesive layer, the base material layer, and the second adhesive layer was 1 mass%. Other conditions were similar to those of Example 2.

In Example 9, the addition amount of nylon 6 in the entire sealing film was 30 mass%. The addition amount of nylon 6 in each of the first adhesive layer, the base material layer, and the second adhesive layer was 30 mass%. Other conditions were similar to those of Example 2.

### EXAMPLE 10

A sealing film in which the first adhesive layer and the second adhesive layer were laminated was produced as follows. The constituent materials of the first adhesive layer and the second adhesive layer were as follows.
First adhesive layer: a mixture of maleic anhydride modified polypropylene (melting point: 140°C) and nylon 6
Second adhesive layer: a mixture of a random copolymer of propylene and ethylene (melting point: 140°C) and nylon 6

The thickness of the first adhesive layer was 20 µm. The thickness of the second adhesive layer was 80 µm. The addition amount of nylon 6 in the entire sealing film was 30 mass%. The addition amount of nylon 6 in each of the first adhesive layer and the second adhesive layer was 30 mass%. Other conditions were similar to those of Example 3.

### EXAMPLES 11 TO 15

Similar to Examples 2 and 4 to 8, sealing films in which the first adhesive layer, the base material layer, and the second adhesive layer were laminated in this order were produced as follows. The laminates (sealing films) were obtained by separately heating and melting each of resins which became raw materials of respective layers and performing simultaneous multilayer film formation using an extruder capable of performing simultaneous multilayer extrusion molding. The laminates were formed to have a strip shape (width: 15 mm, thickness: 100 µm).

The constituent materials of the first adhesive layer, the base material layer, and the second adhesive layer were as follows.
First adhesive layer: maleic anhydride modified polypropylene (melting point: 140°C)
Base material layer: a mixture of a polypropylene ICP (melting point: 161°C) and nylon MXD6 (melting point: 240°C)
Second adhesive layer: a random copolymer of propylene and ethylene (melting point: 140°C)

Maleic anhydride modified polypropylene was similar to the maleic anhydride modified polypropylene used in Example 1.

The polypropylene ICP had a structure in which the second phases were dispersed in the first phase (sea-island structure). The first phase was constituted of homo-PP. The second phases each include ethylene propylene rubber and polyethylene.

Since nylon MXD6 included an amide-bonding atomic group, it was a hydrogen-bonding resin.

The thickness of the first adhesive layer was 25 µm. The thickness of the base material layer was 50 µm. The thickness of the second adhesive layer was 25 µm.

In Example 11, the addition amount of nylon MXD6 in the entire sealing film was 0.5 mass%. The addition amount of nylon MXD6 in the base material layer was 1.0 mass%.

In Example 12, the addition amount of nylon MXD6 in the entire sealing film was 0.8 mass%. The addition amount of nylon MXD6 in the base material layer was 1.5 mass%.

In Example 13, the addition amount of nylon MXD6 in the entire sealing film was 1.0 mass%. The addition amount of nylon MXD6 in the base material layer was 2.0 mass%.

In Example 14, the addition amount of nylon MXD6 in the entire sealing film was 1.3 mass%. The addition amount of nylon MXD6 in the base material layer was 2.5 mass%.

In Example 15, the addition amount of nylon MXD6 in the entire sealing film was 2.0 mass%. The addition amount of nylon MXD6 in the base material layer was 4.0 mass%.

### COMPARATIVE EXAMPLE 1

A sealing film was produced in a manner similar to that of Example 2 except that nylon 6 was not added to the base material layer. The addition amount of nylon 6 in the entire sealing film was 0 mass%.

### REFERENCE EXAMPLE 1

A sealing film was produced in a manner similar to that of Example 1 except that the addition amount of nylon 6 in the base material layer was 0.1 mass%. The addition amount of nylon 6 in the entire sealing film was 0.1 mass%.

### REFERENCE EXAMPLE 2

A sealing film was produced in a manner similar to that of Example 2 except that the addition amount of nylon 6 in the base material layer was 0.2 mass%. The addition amount of nylon 6 in the entire sealing film was 0.1 mass%.

### REFERENCE EXAMPLE 3

A sealing film was produced in a manner similar to that of Example 2 except that the addition amount of nylon 6 in the base material layer was 80 mass%. The addition amount of nylon 6 in the entire sealing film was 40 mass%.

### PRODUCTION OF ELECTRODE LEAD WIRE

An electrode lead wire having a lead wire body and a surface-treated layer formed on a surface of the lead wire body was produced. A nickel-plated copper foil having a rectangular shape (width 45 mm × length 52 mm) was used as the lead wire body.

### [Test 1: measurement of adhesive strength with respect to electrode lead wire (non-immersion)]

For the sealing films of Examples 1 to 15, Comparative Example 1, and Reference Examples 1 to 3, the adhesive strength of the sealing film with respect to the electrode lead wire was measured as follows. Since a sample for measurement was not immersed (which will be described below) in an electrolyte, this test was a test under a condition of "non-immersion".

A sample for measurement was obtained by causing the sealing film and the electrode lead wire to overlap and adhere to each other by heat-sealing. The conditions for heat-sealing were 180°C, 0.5 MPa, and 10 seconds.

Regarding this sample for measurement, using a testing instrument (Table-Top Type Universal Testing Instrument manufactured by SHIMADZU CORPORATION: Autograph AGS-500NX), 180-degree peel strength (adhesive strength) was measured as follows.

An end portion of the sealing film and an end portion of the electrode lead wire were grasped with grip portions of the testing instrument, and the sealing film was peeled off from the electrode lead wire to realize 180-degree peeling. The peeling speed was 50 mm/min.

Table 1 shows measurement results regarding the sealing films of Examples 1 to 10, Comparative Example 1, and Reference Examples 1 to 3. Table 2 shows measurement results regarding the sealing films of Examples 11 to 15.

### [Test 2: measurement of adhesive strength with respect to electrode lead wire (after immersion)]

For the sealing films of Examples 1 to 15, Comparative Example 1, and Reference Examples 1 to 3, the adhesive strength of the sealing film with respect to the electrode lead wire was measured as follows. Since measurement was performed after a sample for measurement was immersed in an electrolyte, this test was a test under a condition of "after immersion". A packaging bag was produced using a laminate for a battery exterior, and an electrolyte including 1.6 mol/liter of LiPF6 (DMC:EMC:EC (volume basis)=4:3:3) was input thereto. 0.2 mass% (2,000 ppm) of pure water was added to the electrolyte.

A sample for measurement produced in a manner similar to that of Test 1 described above was input to this packaging bag and was immersed I n the electrolyte. The packaging bag having the sample for measurement input thereto was preserved in an oven at 85°C for seven days, and the 180-degree peel strength (adhesive strength) was measured in a manner similar to that of Test 1.

In Tests 1 and 2, when the adhesive strength became 1 N/mm or greater, it was judged to be "good". When the adhesive strength became smaller than 1 N/mm, it was judged to be "low". Table 1 shows measurement results regarding the sealing films of Examples 1 to 10, Comparative Example 1, and Reference Examples 1 to 3. Table 2 shows measurement results regarding the sealing films of Examples 11 to 15.

### [Measurement of mechanical strength]

For the sealing films of Examples 1 to 15, Comparative Example 1, and Reference Examples 1 to 3, the mechanical strength of the sealing film was measured as follows.

Using each sealing film, a dumbbell-shaped test piece of Type 5 stipulated in JIS K7127 was produced. This test piece was subjected to a tensile test using Table-Top Type Universal Testing Instrument Autograph AGS-X manufactured by SHIMADZU CORPORATION in conformity with JIS K7127. The distance between chucks was set to 80 mm. The test speed (tensile speed) was set to 500 mm/min. Regarding the test environment, the temperature was set to 23°C and the humidity was set to 50 %RH.

When the tensile strength (breaking strength) at the time of cutting became 25 MPa or greater, it was judged to be "good". When the breaking strength became smaller than 25 MPa, it was judged to be "low". Table 1 shows measurement results regarding the sealing films of Examples 1 to 10, Comparative Example 1, and Reference Examples 1 to 3. Table 2 shows measurement results regarding the sealing films of Examples 11 to 15.

Tables 1 and 2 collectively show the product [mass%·µm] of the addition amount [mass%] of the hydrogen-bonding resin (nylon 6 or nylon MXD6) in each layer and the thickness [µm] of the layer (addition amount of hydrogen-bonding resin × thickness), and the addition amount [mass%] of the hydrogen-bonding resin in the entire sealing film.

**[Table 1]**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Thickness [µm] | First adhesive layer | - | 10 | 10 | 10 | 10 | 10 | 10 | 10 | 10 | 20 |
| | Base material layer | 100 | 50 | 50 | 50 | 50 | 50 | 50 | 50 | 50 | |
| | Second adhesive layer | - | 40 | 40 | 40 | 40 | 40 | 40 | 40 | 40 | 80 |
| Total thickness [µm] | | 100 | 100 | 100 | 100 | 100 | 100 | 100 | 100 | 100 | 100 |
| Addition amount of hydrogen-bonding resin [mass%] | First adhesive layer | - | 0 | 1 | 0 | 0 | 0 | 0 | 0 | 30 | 30 |
| | Base material layer | 0.2 | 0.4 | 1 | 2 | 10 | 20 | 40 | 60 | 30 | |
| | Second adhesive layer | - | 0 | 1 | 0 | 0 | 0 | 0 | 0 | 30 | 30 |
| Addition amount of hydrogen-bonding resin × thickness [mass%·µm] | First adhesive layer | - | 0 | 10 | 0 | 0 | 0 | 0 | 0 | 300 | 600 |
| | Base material layer | 20 | 20 | 50 | 100 | 500 | 1,000 | 2,000 | 3,000 | 1,500 | |
| | Second adhesive layer | - | 0 | 40 | 0 | 0 | 0 | 0 | 0 | 1,200 | 2,400 |
| | Total | 20 | 20 | 100 | 100 | 500 | 1,000 | 2,000 | 3,000 | 3,000 | 3,000 |
| Addition amount of hydrogen-bonding resin in entire sealing film [mass%] | | 0.2 | 0.2 | 1 | 1 | 5 | 10 | 20 | 30 | 30 | 30 |
| Adhesive strength [N/mm] | Non-immersion | Good | Good | Good | Good | Good | Good | Good | Good | Good | Good |
| | After immersion | Good | Good | Good | Good | Good | Good | Good | Good | Good | Good |
| Mechanical strength [MPa] | | Good | Good | Good | Good | Good | Good | Good | Good | Good | Good |

| | | Comparative Example 1 | Reference Example 1 | Reference Example 2 | Reference Example 3 |
|---|---|---|---|---|---|
| Thickness [µm] | First adhesive layer | 10 | - | 10 | 10 |
| | Base material layer | 50 | 100 | 50 | 50 |
| | Second adhesive layer | 40 | - | 40 | 40 |
| Total thickness [µm] | | 100 | 100 | 100 | 100 |
| Addition amount of hydrogen-bonding resin [mass%] | First adhesive layer | 0 | - | 0 | 0 |
| | Base material layer | 0 | 0.1 | 0.2 | 80 |
| | Second adhesive layer | 0 | - | 0 | 0 |
| Addition amount of hydrogen-bonding resin × thickness [mass%·µm] | First adhesive layer | 0 | - | 0 | 0 |
| | Base material layer | 0 | 10 | 10 | 4,000 |
| | Second adhesive layer | 0 | - | 0 | 0 |
| | Total | 0 | 10 | 10 | 4,000 |
| Addition amount of hydrogen-bonding resin in entire sealing film [mass%] | | 0 | 0.1 | 0.1 | 40 |
| Adhesive strength [N/mm] | Non-immersion | Good | Good | Good | Good |
| | After immersion | Low | Low | Low | Good |
| Mechanical strength [MPa] | | Good | Good | Good | Low |

**[Table 2]**

| | | Example 11 | Example 12 | Example 13 | Example 14 | Example 15 |
|---|---|---|---|---|---|---|
| Thickness [µm] | First adhesive layer | 25 | 25 | 25 | 25 | 25 |
| | Base material layer | 50 | 50 | 50 | 50 | 50 |
| | Second adhesive layer | 25 | 25 | 25 | 25 | 25 |
| Total thickness [µm] | | 100 | 100 | 100 | 100 | 100 |
| Addition amount of hydrogen-bonding resin [mass%] | First adhesive layer | 0 | 0 | 0 | 0 | 0 |
| | Base material layer | 1.0 | 1.5 | 2.0 | 2.5 | 4.0 |
| | Second adhesive layer | 0 | 0 | 0 | 0 | 0 |
| Addition amount of hydrogen-bonding resin × thickness [mass%·µm] | First adhesive layer | 0 | 0 | 0 | 0 | 0 |
| | Base material layer | 50 | 75 | 100 | 125 | 200 |
| | Second adhesive layer | 0 | 0 | 0 | 0 | 0 |
| | Total | 50 | 75 | 100 | 125 | 200 |
| Addition amount of hydrogen-bonding resin in entire sealing film [mass%] | | 0.5 | 0.8 | 1.0 | 1.3 | 2.0 |
| Adhesive strength [N/mm] | Non-immersion | Good | Good | Good | Good | Good |
| | After immersion | Good | Good | Good | Good | Good |
| Mechanical strength [MPa] | | Good | Good | Good | Good | Good |

As shown in Tables 1 and 2, in Examples 1 to 15, a high adhesive strength was obtained in both cases of non-immersion and after immersion. Examples 1 to 15 also indicated high values of mechanical strength.

In contrast, in Comparative Example 1 including no hydrogen-bonding resin, the adhesive strength decreased after immersion in the electrolyte. In Reference Examples 1 and 2 having a small addition amount of the hydrogen-bonding resin, the adhesive strength decreased after immersion in the electrolyte. In Reference Example 3 having a large addition amount of the hydrogen-bonding resin, the mechanical strength decreased.

### INDUSTRIAL APPLICABILITY

According to a sealing film, an electrode lead wire member, and a battery of the present invention, degradation in adhesive strength caused by hydrogen fluoride can be curbed so that the present invention can be used industrially.

### REFERENCE SIGNS LIST

1, 401, 501 Sealing film
2 First adhesive layer (first thermoplastic resin layer)
3 Second adhesive layer (second thermoplastic resin layer)
4 Base material layer (third thermoplastic resin layer)
10 Electrode lead wire member
11 Electrode lead wire
20 Housing vessel
21 Vessel body
22 Lid
30 Lithium-ion battery
100 Battery
102 First adhesive layer (first thermoplastic resin layer)
103 Second adhesive layer (second thermoplastic resin layer)
111 Lead wire body
112 Surface-treated layer
201 First film base material
202 Second film base material
203 Metal layer
204 Sealant layer

## Claims

1. A sealing film that seals a gap between an electrode lead wire electrically connected to a battery body and a housing vessel housing the battery body, the sealing film comprising:
one or a plurality of thermoplastic resin layers,
wherein at least one of the thermoplastic resin layers includes a hydrogen-bonding resin having a structure allowing hydrogen bonding between molecules thereof.

2. The sealing film according to claim 1,
wherein the plurality of thermoplastic resin layers are provided,
the plurality of thermoplastic resin layers include
a first thermoplastic resin layer serving as a first adhesive layer which adheres to the electrode lead wire,
a second thermoplastic resin layer serving as a second adhesive layer which adheres to the housing vessel, and
a third thermoplastic resin layer serving as a base material layer which is provided between the first adhesive layer and the second adhesive layer, and
the hydrogen-bonding resin is included in at least one of the first to third thermoplastic resin layers.

3. The sealing film according to claim 2,
wherein the first thermoplastic resin layer includes an acid-modified polyolefin.

4. The sealing film according to claim 2 or 3,
wherein the hydrogen-bonding resin is included in the first thermoplastic resin layer.

5. The sealing film according to any one of claims 2 to 4,
wherein the hydrogen-bonding resin is included in the third thermoplastic resin layer.

6. The sealing film according to claim 3,
wherein the first thermoplastic resin layer includes 50 mass% or more of the acid-modified polyolefin.

7. The sealing film according to any one of claims 2 to 6,
wherein the third thermoplastic resin layer includes 10 mass% or more of acid-modified polyolefin.

8. The sealing film according to any one of claims 1 to 7,
wherein an addition amount of the hydrogen-bonding resin in the entire sealing film is 0.2 mass% or more and 30 mass% or less.

9. The sealing film according to any one of claims 1 to 8,
wherein the hydrogen-bonding resin is a polyamide-based resin.

10. An electrode lead wire member comprising:
the sealing film according to any one of claims 1 to 9; and
the electrode lead wire extending in one direction.

11. A battery comprising:
a battery body;
a housing vessel housing the battery body; and
the electrode lead wire member according to claim 10.
